# EUROPÄISCHE PATENTSCHRIFT

(11) **EP 2 994 801 B1**
(45) Veröffentlichungstag und Bekanntmachung des Hinweises auf die Patenterteilung: **01.06.2022**
(21) Anmeldenummer: 13756393.8
(22) Anmeldetag: 27.08.2013
(51) Int. Cl.: G05B 19/042

(54) **SPEICHERPROGRAMMIERBARE STEUERUNG**
PROGRAMMABLE LOGIC CONTROLLER
COMMANDE PROGRAMMABLE PAR UNE MÉMOIRE

(30) Priorität: 26.07.2013 EP 13178200
(43) Veröffentlichungstag der Anmeldung: 16.03.2016
(73) Patentinhaber: Siemens Aktiengesellschaft, 80333 München (DE)
(72) Erfinder: KIESEL, Martin, 91099 Poxdorf (DE); TRENNER, Thomas, 90766 Fürth (DE); HEUSCHMANN, Christian, 38106 Braunschweig (DE)
(86) Internationale Anmeldenummer: PCT/EP2013/067657
(87) Internationale Veröffentlichungsnummer: WO 2015/010751

(56) Entgegenhaltungen:
- EP-A2- 2 498 156
- WO-A1-2012/031859
- US-A1- 2010 057 428
- SEBASTIAN KAIN ET AL: "Von der virtuellen Inbetriebnahme zur Betriebsparallelen Simulation", AUTOMATISIERUNGSTECHNISCHE PRAXIS - ATP, OLDENBOURG INDUSTRIEVERLAG, MUNCHEN, DE , Bd. 8 1. Januar 2008 (2008-01-01), Seiten 48-52, XP008147290, ISSN: 0178-2320 Gefunden im Internet: URL:https://www.oldenbourg-industrieverlag .de/de/Zeitschriften/atp-edition/2008/08
- SEBASTIAN KAIN ET AL: "Monitoring and diagnostics of hybrid automation systems based on synchronous simulation", INDUSTRIAL INFORMATICS (INDIN), 2010 8TH IEEE INTERNATIONAL CONFERENCE ON, IEEE, PISCATAWAY, NJ, USA, 13. Juli 2010 (2010-07-13), Seiten 260-265, XP031733436, ISBN: 978-1-4244-7298-7
- Sebastian Kain ET AL: "Überwachung und Diagnose mit betriebsparallelen Simulationsmethoden - Monitoring and Diagnostics based on Synchronous Simulation Methods", Karlsruhe, KIT Scientific Publishing, 1. Januar 2010 (2010-01-01), XP055095405, Gefunden im Internet: URL:http://www.asim-fachtagung-spl.de/asim 2010/papers/Proof 164-2.pdf [gefunden am 2014-01-09]
- KAIN S ET AL: "Betriebsparallele Simulationsanwendungen. Methodik zur Klassifikation = Simulation Applications in the Operation Phase. Methodology for Classification", ATP EDITION,, Nr. 6, 1. Juni 2010 (2010-06-01), Seiten 50-59, XP009175396, ISSN: 2190-4111
- None

## Beschreibung

Die Erfindung betrifft eine speicherprogrammierbare Steuerung (SPS), insbesondere zur Steuerung einer Anlage. Weiter betrifft die Erfindung eine Recheneinheit, eine Vorrichtung zur Steuerung einer Anlage, ein Verfahren zur Steuerung einer speicherprogrammierbaren Steuerung, ein Simulationsprogramm und eine Anlage, die eine hier beschriebene speicherprogrammierbare Steuerung aufweist. Ferner betrifft die Erfindung ein Programm zum Betrieb einer speicherprogrammierbaren Steuerung.

Moderne speicherprogrammierbare Steuerungen, oft als SPS abgekürzt, dienen zur Steuerung einfacher und komplexer Anlagen, beispielsweise zur Produktion von Gütern. Neben der Steuerung der Motoren der Anlagen empfangen speicherprogrammierbare Steuerungen Daten von Sensoren, welche den Zustand der Anlage beschreiben. Moderne speicherprogrammierbare Steuerungen können zusätzlich Simulationsprogramme aufweisen, die oft auf einer separaten Recheneinheit installiert sind. Das Simulationsprogramm dient beispielsweise zur Berechnung einer virtuellen Sensorik. Die virtuelle Sensorik dient zur Steuerung der Anlage, insbesondere zur Vermeidung von Störungen. Die Kommunikation zwischen speicherprogrammierbarer Steuerung und Anlage erfolgt oftmals durch so genannte Prozessabbilder.

DE 10 2009 030 842 A1 beschreibt einen Emulator, ein System und ein Verfahren zur Emulation einer Steuerung, wobei der Emulator eine Nachbildung einer Betriebssystemfunktionalität der Steuerung aufweist. Nachteilig am bisherigen Stand der Technik ist die mangelnde Kompatibilität von Simulationsprogrammen und/oder Simulationsroutinen und speicherprogrammierbaren Steuerungen respektive deren Datenstrukturen.

EP 2 498 156 A2 beschreibt eine Simulation für einen industriellen Prozess und eine hierfür geeignete Vorrichtung.

WO 2012/031859 A1 beschreibt ebenfalls eine Steuervorrichtung zum Steuern von Einrichtungen einer Fabrikanlage.

US 2010/057428 A1 beschreibt eine Simulation einer Maschine oder Anlage mit Hilfe eines Multi-Core Prozessors.

Dem bisherigen Stand der Technik ist es gemein, dass eine verbesserte Absturzsicherung einer speicherprogrammierbaren Steuerung nicht erfolgt.

Daher ist es Aufgabe der Erfindung, eine einfache Projektierungsmöglichkeit des Datenaustauschs zwischen der speicher speicherprogrammierbaren Steuerung und dem Simulationsprogramm bereitzustellen. Weiter ist es Aufgabe der Erfindung, die Konsistenz der ausgetauschten Daten zwischen der speicherprogrammierbaren Steuerung und dem Simulationsprogramm sicherzustellen.

Die Aufgabe wird durch eine speicherprogrammierbare Steuerung gemäß den Merkmalen des Anspruchs 1, durch Verfahren gemäß den Merkmalen des Anspruchs 10, und/oder durch eine Anlage gemäß den Merkmalen des Anspruchs 12 gelöst.

Unter einer Steuerung versteht man eine Vorrichtung zum Steuern und Regeln einer Anlage. Anlagen sind beispielsweise Produktionsanlagen, Druckmaschinen, Verpackungsmaschinen oder auch eine Motorsteuerung, insbesondere ein Umrichter. Unter einer Recheneinheit versteht man einen Computer in jeglicher Ausführung, insbesondere einen tragbaren Computer als auch einen stationären Computer sowie nicht lokale Recheneinheiten, die über ein Netzwerk mit der speicherprogrammierbaren Steuerung verbunden sind. Beispielsweise sind auch Cloud-Dienste darunter summierbar. Die Recheneinheit kann auch in der speicherprogrammierbaren Steuerung integriert sein. In einer vorteilhaften Ausgestaltung ist eine Recheneinheit sowohl zum Ablauf des Simulationsprogramms als auch zur Steuerung der Anlage, insbesondere auf unterschiedlichen Kernen eines Prozessors, vorgesehen. Ein Prozessabbild einer Anlage weist Informationen bezüglich der Stellung von Aktoren der Anlage und/oder Betriebsdaten der elektrischen Maschinen, der Anlage und/oder der Sensoren auf. Ein Prozessabbild weist weiter Stellungen von Aktoren sowie mittels der Sensoren der Anlage ermittelte Größen wie Drehzahl von einem Elektromotor oder die Füllstandsanzeige eines Behälters und/oder weitere Größen auf.

Prozessabbilder bestehen ggf. aus Eingangsprozessabbildern und aus Ausgangsprozessabbildern. Das Eingangsprozessabbild ist ein Prozessabbild, das von der Anlage zur speicherprogrammierbaren Steuerung übertragen wird. Das Eingangsprozessabbild ist ein Teil des Prozessabbildes. Das Eingangsprozessabbild enthält beispielsweise ermittelte Sensordaten und/oder mittels Sensoren auslesbare Stellungen von Aktoren und/oder gemessene Betriebsgrößen elektrischer Maschinen der Anlage. Das Ausgangsprozessabbild ist ein Prozessabbild oder ein Teil des Prozessabbildes, das von der speicherprogrammierbaren Steuerung zur Anlage übertragen wird. Das Ausgangsprozessabbild enthält regelmäßig Befehle zur Stellung von Aktoren, beispielsweise "Ventil zu 70% schließen", und/oder Befehle zur Aktivierung von Sensoren.

Das erweiterte Prozessabbild liegt in einem Datenformat vor, welches von der Simulationssoftware verarbeitet wird. Erfindungsgemäß weist das erweiterte Prozessabbild mindestens eine Kopie des Prozessabbilds auf. Vorteilhaft ist dies eine einfache Umwandlung des Prozessabbildes in das erweiterte Prozessabbild. In einem nicht beanspruchten Beispiel weist das erweiterte Prozessabbild nur einen Teil des Prozessabbildes auf. Gegebenenfalls ist eine Umwandlung des Prozessabbildes in das erweiterte Prozessabbild mit einer Veränderung der Datenstruktur oder dem Datenformat verknüpft. Bei der Umwandlung dient eine Umwandlungsroutine, insbesondere eine Umwandlungsroutine als Teil eines Projektierungswerkzeugs, zur Änderung der Datenstruktur und/oder dem Datenformat. Regelmäßig ist das erweiterte Prozessabbild nur eine Kopie des Prozessabbildes oder mehrere Kopien des Prozessabbildes. Die Kopien der erweiterten Prozessabbilder sind in einem Speicher, insbesondere im Speicher der speicherprogrammierbaren Steuerung, abgespeichert.

Wie das Prozessabbild in Eingangsprozessabbild und Ausgangsprozessabbild einteilbar ist, so ist auch das erweiterte Prozessabbild in ein erweitertes Eingangsprozessabbild und ein erweitertes Ausgangsprozessabbild unterteilbar. Beispielsweise kann das erweiterte Prozessabbild aus einem erweitertem Eingangsprozessabbild oder einem erweiterten Ausgangsprozessabbild bestehen. Dabei wird das Eingangsprozessabbild vor der Umwandlungsroutine in das erweiterte Eingangsprozessabbild umgewandelt und das Ausgangsprozessabbild mittels der Umwandlungsroutine in das erweiterte Ausgangsprozessabbild umgewandelt. Regelmäßig beschränkt sich eine Umwandlungsroutine auf das Erstellen einer oder mehrerer Kopien. Weiter ist auch eine Einteilung des Prozessabbildes sowie des erweiterten Prozessabbildes in unterschiedliche Zeitbereiche möglich. Die Einteilung ist in diesem Fall vorteilhaft variabel bezüglich der Zeitabschnitte und/oder Zeitpunkte zu gestalten. So ist es vorteilhaft, Prozessabbilder in Stellungen von Aktoren zu bestimmten Zeitpunkten, die bereits vergangen sind sowie Stellungen von Aktoren zu zukünftig erreichten Zeitpunkten, einzuteilen. Die Einteilung und/oder die Verwaltung des Prozessabbildes sowie des erweiterten Prozessabbildes erfolgt beispielsweise durch das Betriebssystem oder eine Laufzeitumgebung der speicherprogrammierbaren Steuerung. Das Betriebssystem der speicherprogrammierbaren Steuerung verwaltet auch die Bereiche des Speichers, auf denen das Prozessabbildung und/oder das erweiterte Prozessabbild gespeichert sind.

Die Zeitbereiche und Zeitpunkte werden vorteilhaft von einer Uhr, einem Zeitgeber oder einem Taktgeber vorgegeben. Zu einer Synchronisation von Prozessen in der speicherprogrammierbaren Steuerung, der Anlage, der Recheneinheit und/oder der Ausführungsebene ist eine Übertragung des Zeitsignals durch eine technische Datenverbindung vorteilhaft.

Unter einem Simulationsprogramm versteht man ein Computerprogramm, welches Prozessabbilder und/oder erweiterte Prozessabbilder einliest und aus diesen weitere Daten, beispielsweise eine virtuelle Sensorik, ermittelt. Vorteilhaft wird aus den erweiterten Prozessabbildern die virtuelle Sensorik errechnet, welche durch Messung, insbesondere an der Anlage, nicht oder nur schwierig zugänglich ist. Beispiele für die virtuelle Sensorik sind Temperaturen in schwer zugänglichen Behältern und/oder Bakterienpopulationen innerhalb von Gefäßen. Die virtuelle Sensorik dient insbesondere zur Verbesserung der Betriebsstabilität der Anlage. So kann beispielsweise ein drohender Ausfall eines Teils einer Anlage frühzeitig erkannt werden und ein Signal zu einer zuständigen Stelle übertragen werden und/oder in den Betrieb der Anlage korrigierend eingegriffen werden.

In einer besonders bevorzugten Ausführungsform der speicherprogrammierbaren Steuerung ist die virtuelle Sensorik für einen Anwender als eine Erweiterung des Prozessabbildes wahrnehmbar.

Vorteilhaft erfolgt eine Trennung der Recheneinheit und der speicherprogrammierbaren Steuerung, insbesondere aus Kostenvorteilen und/oder geringerem Platzbedarf. Regelmäßig benötigt die speicherprogrammierbare Steuerung weniger Rechenleistung als die Recheneinheit, welche das Simulationsprogramm aufweist. Daher ist eine Trennung sinnvoll, falls sich die speicherprogrammierbare Steuerung und die Recheneinheit ggf. untereinander nachteilig beeinflussen. Weiter kann eine Recheneinheit mit mehreren speicherprogrammierbaren Steuerungen verbunden sein. Jedoch ist eine Integration der Recheneinheit in die speicherprogrammierbare Steuerung ggf. vorteilhaft, falls die Rechenleistung der speicherprogrammierbaren Steuerung ausreicht, zusätzlich das Simulationsprogramm auszuführen.

Gegebenenfalls ist eine speicherprogrammierbare Steuerung in eine Recheneinheit, beispielsweise durch eine Steckkarte oder ein, der Recheneinheit internes Modul integrierbar.

Mittels einer speicherprogrammierbaren Steuerung lässt sich eine oder mehrere Anlagen simulieren als auch steuern und/oder regeln. Weiter kann eine Recheneinheit mit einem Simulationsprogramm mit mehreren speicherprogrammierbaren Steuerungen verbunden sein. Die Prozessabbilder sowie die erweiterten Prozessabbilder sind vorteilhaft in regelmäßigen Abständen zu überprüfen und ggf. durch aktuelle Prozessabbilder und/oder erweiterte Prozessabbilder zu ersetzen. Vorteilhaft sind die Zeitpunkte der Überprüfung vom Anwender der speicherprogrammierbaren Steuerung und/oder des Simulationsprogramms wählbar. Die Festlegung der Zeitpunkte erfolgt vorteilhaft durch ein Projektierungswerkzeug.

Eine Synchronisation der Datenübertragung innerhalb der speicherprogrammierbaren Steuerung wird durch einen Taktgeber, eine Uhr oder ein externes Triggersignal gewährleistet. Eine Synchronisation der Recheneinheiten und der speicherprogrammierbaren Steuerung erfolgt vorteilhaft durch eine Übertragung des Zeitsignals mittels der technischen Datenübertragung.

Bei der Programmierung der speicherprogrammierbaren Steuerung erfolgt das Einbinden des Simulationsprogramms vorteilhaft als Symbol zur Bestimmung der virtuellen Sensorik und/oder gegebenenfalls weiterer Daten, welche durch die Anlage nicht bestimmbar sind. Durch die Umwandlung des Prozessabbildes in das erweiterte Prozessabbild, wobei das erweiterte Prozessabbild in einem Datenformat vorliegt, welches vom Simulationsprogramm direkt einlesbar ist, ist die Bedienung der speicherprogrammierbaren Steuerung durch den Anwender auf der einen Seite und die Bedienung des Simulationsprogramms durch den Anwender auf der anderen Seite unabhängig voneinander.

Die speicherprogrammierbare Steuerung weist vorteilhaft eine Vorrichtung zur Visualisierung des ablaufenden Programms, insbesondere ein Display oder einen Bildschirm auf. Falls die speicherprogrammierbare keine ausreichende Vorrichtung zur Visualisierung aufweist, so kann diese vorteilhaft mit einer Anschlussmöglichkeit für eine Vorrichtung zur Visualisierung Ausgestattet sein.

Weiter kann die speicherprogrammierbare Steuerung einen Anschluss für einen Computer und/oder eine Ausführungsebene aufweisen, mit welchem die speicherprogrammierbare Steuerung programmierbar, überwachbar und/oder simulierbar ist. In einer weiteren vorteilhaften Ausführungsform ist die speicherprogrammierbare Steuerung in einen Computer oder eine Recheneinheit integriert.

Vorteilhaft ist durch den Zugriff auf das erweiterte Prozessabbild eine Erhöhung der Kompatibilität, d.h. eine Verwendungsmöglichkeit unterschiedlicher Simulationsprogramme für eine speicherprogrammierbare Steuerung und umgekehrt erreichbar. Der Zugriff des Simulationsprogramms auf das erweiterte Prozessabbild erleichtert die Programmierung des Simulationsprogramms, da eine manuelle Umwandlung der Datenformate durch den Anwender entfällt. Durch eine Trennung von Arbeitswelten ist eine höhere Spezialisierung des Anwenders der speicherprogrammierbaren Steuerung sowie des Programmierens eines Simulationsprogramms möglich.

Für das Projektierungswerkzeug ist es dabei unerheblich, ob es sich um eine gemessene oder berechnete Sensorik handelt. Das Projektierungswerkzeug behandelt eine, in der Recheneinheit mittels des Simulationsprogramms berechnete virtuelle Sensorik wie eine gemessene Sensorik, insbesondere eine Sensorik als Teil des Prozessabbildes.

Bei einer vorteilhaften Ausgestaltung besteht das erweiterte Prozessabbild aus mehreren Kopien des Prozessabbildes.

Durch einen einfachen Kopiervorgang entfällt vorteilhaft eine Umwandlungsroutine. Falls das erweiterte Prozessabbild nur die für die Steuerung und/oder Regelung bedeutenden Anteile des Prozessabbildes aufweist, so ist vorteilhaft der benötigte Speicherplatz geringer.

Die Umwandlung und/oder der Kopiervorgang des Prozessabbildes in das erweiterte Prozessabbild erfolgt vorteilhaft automatisiert, d.h. ohne dass ein Anwender der speicherprogrammierbaren Steuerung oder ein Anwender des Simulationsprogramms davon Kenntnis erhält. Der Anwender muss vorteilhaft nicht eigenständig bei der Programmierung der speicherprogrammierbaren Steuerung und/oder des Simulationsprogramms auf die Prozessabbilder oder die Umwandlungsroutine selbst zugreifen.

Falls eine Umwandlungsroutine zum Einsatz kommt, ist die Umwandlungsroutine vorteilhaft so zu gestalten, dass die Umwandlungsroutine Prozessabbilder in mehreren Datenformaten aufnehmen und Prozessabbilder in mehreren unterschiedlichen Datenformaten ausgeben kann. Vorteilhaft wird eine Entscheidung über das benötigte Datenformat bei einer Verbindung der speicherprogrammierbaren Steuerung mit dem Simulationsprogramm, respektive der Recheneinheit, festgelegt. Dies erhöht die Kompatibilität der Anschlussmöglichkeiten von Anlagen, Recheneinheiten und die Benutzung von unterschiedlichen Simulationsprogrammen.

Unter einem Projektierungswerkzeug versteht man beispielsweise eine Software, für die Planung und Entwicklung von Steuerungssystemen oder Anlagen.

Bei einer weiteren vorteilhaften Ausgestaltung der speicherprogrammierbaren Steuerung liegt das Prozessabbild in einem Format, insbesondere als binäres Format vor, wobei das erweiterte Prozessabbild mindestens einen Teil des Prozessabbildes enthält und ggf. einem geänderten Format, insbesondere einem Gleitkommaformat, vorliegt.

Unter einem binären Format versteht man ein Datenformat, welches zur Ansteuerung einer Anlage, aufweisend elektrische Maschinen und Sensoren, dient. Es besteht insbesondere aus Befehlen, beispielsweise bestehend aus mindestens einer Zahlen-Buchstaben-Kombination, gepaart mit einer Zeitvorgabe und/ oder weiteren Parametern sowie ggf. weiteren Daten wie maschinenspezifischen Daten. Die Befehle dienen zur Ansteuerung der Aktoren der Anlage, beispielsweise eines Elektromotors, zu einem bestimmten Zeitpunkt, sowie als Parameter für eine bestimmte Drehzahl.

Vorteilhaft werden durch eine Veränderung des Datenformates des erweiterten Prozessabbildes im Vergleich zum Datenformat des Prozessabbildes die kompatiblen Simulationsprogramme erhöht, welche auf das erweiterte Prozessabbild zugreifen können, ohne dass eine umständliche Datenumwandlung innerhalb des Simulationsprogramm vorgenommen werden muss.

In einer besonders bevorzugten Ausführung ist das Datenformat des Prozessabbildes und des erweiterten Prozessabbildes identisch. So entfällt vorteilhaft die Umwandlungsroutine.

Bei einer weiteren vorteilhaften Ausgestaltungsform ist zur Unterstützung einer Bereitstellung des erweiterten Prozessabbildes sowie der virtuellen Sensorik ein Engineeringsystem vorgesehen.

Das Engineeringsystem weist vorteilhaft ein Dialogfenster oder eine ähnliche Einrichtung zur Kommunikation mit dem Benutzer auf. Mittels des Dialogfensters kann der Anwender vorteilhaft die Erstellung des erweiterten Prozessabbildes und/ oder der virtuellen Sensorik vorgeben und/oder steuern.

Bei einer weiteren vorteilhaften Ausgestaltung ist das erweiterte Prozessabbild für einen Anwender nicht sichtbar.

Vorteilhaft ist der Anwender durch die Unsichtbarkeit des erweiterten Prozessabbildes nicht verwirrt. Vorteilhaft muss der Anwender einen besonderen Modus, insbesondere in einem Dialogfenster, wählen, um das erweiterte Prozessabbild einsehen zu können. Vorteilhaft ist so eine Kommunikation des Anwenders mit der speicherprogrammierbaren Steuerung und/oder der Ausführungsebene und/oder des Engineeringsystems vereinfacht.

Bei einer weiteren vorteilhaften Ausgestaltung ist eine Modifikation des Prozessabbildes, des erweiterten Prozessabbildes und/oder der virtuellen Sensorik zu vorgebbaren Zeitpunkten und/oder zu Zeitpunkten, die sich aus einem Betrieb der Anlage und/oder der Recheneinheit ergeben, vorgesehen.

Insbesondere für mehrere, zur gleichen Zeit ablaufenden Prozesse erfolgt ein Zugriff auf den Speicher in unregelmäßigen Zeitabständen. Vorteilhaft werden, insbesondere durch das Betriebssystem der speicherprogrammierbaren Steuerung gesteuert, zu schreibende Daten in dem Speicher und/oder einem weiteren Speicher gepuffert.

Das Prozessabbild kann sich im Betrieb der Anlage oder während einer Emulation oder einer Simulation der Anlage mit der Zeit verändern. Beispielsweise führen Störungen der Anlage zu einer Änderung des Prozessabbildes. Weiter kann das Prozessabbild kontinuierliche Änderungen, wie zeitlich verändernde Bitbefehle oder zeitlich veränderliche Sensorwerte, aufweisen. Im Fall einer regelmäßigen und/oder kontinuierlichen Veränderung von Betriebsdaten der Anlage ist das Prozessabbild zu vorgebbaren, ggf. regelmäßig erfolgenden, Zeitpunkten zu erneuern. Durch eine Veränderung des Prozessabbildes ist auch das erweiterte Prozessabbild in vorgebbaren, sich aus dem Betrieb der Anlage ergebenen und/oder regelmäßigen zeitlichen Abständen zu verändern.

Besonders vorteilhaft sind eine kontinuierliche oder regelmäßige Überwachung des Prozessabbildes und/oder einer Überwachung weiterer Prozesse, wie den Zugriff auf den Speicher. In einer besonders bevorzugten Ausgestaltung dient zur Überwachung das Engineeringsystem.

Bei einer weiteren vorteilhaften Ausgestaltung ist das Engineeringsystem zur Auswahl des erweiterten Prozessabbildes und/oder der virtuellen Sensorik vorgesehen.

Mittels des Engineeringsystems kann der Benutzer der speicherprogrammierbaren Steuerung vorteilhaft den Teil des Prozessabbildes, der für die Steuerung der Anlage und/oder des Simulationsprogramms notwendig auswählen. Weiter kann der der Anwender vorteilhaft Teile der virtuellen Sensorik und oder weiterer Daten auswählen. Die Auswahl dient vorteilhaft zur Verbesserung der Steuerung der Anlage durch die speicherprogrammierbare Steuerung. Weiter ist das Engineeringsystem aufgrund einer vorhandenen Kompatibilität zur Auswahl geeignet, da die speicherprogrammierbare Steuerung ebenfalls vorteilhaft mit einem Engineeringsystem programmiert wird. Durch eine Bündelung der Auswahl ergibt sich der Vorteil der einfachen Bedienung für den Anwender.

Bei einer weiteren vorteilhaften Ausgestaltung ist eine Ausführungsebene zur Modifikation von Vorgängen in der speicherprogrammierbaren Steuerung unter Berücksichtigung der virtuellen Sensorik und/oder dem Prozessabbild vorgesehen, wobei sich das erweiterte Prozessabbild von außerhalb der speicherprogrammierbaren Steuerung wie ein Prozessabbild verhält.

Die Ausführungsebene ist vorteilhaft zumindest Teil des Engineeringsystems. Beispielsweise ist die Ausführungsebene als Menüsteuerung, als Dialogfenster oder als eine ähnliche Kommunikationsschnittstelle ausgeführt. Vorteilhaft wird die virtuelle Sensorik dergestalt in das Prozessabbild integriert, so dass das Prozessabbild ohne Einschränkung zur Steuerung der Anlage mittels der speicherprogrammierbaren Steuerung dienen kann. Diese Ausführungsform ist besonders einfach bedienbar.

In einer weiteren vorteilhaften Ausgestaltung erfolgt der Zugriff auf den Speicher durch die speicherprogrammierte Steuerung und/oder durch das Simulationsprogramm jeweils nur während bestimmten Zeitbereichen, wobei das Betriebssystem der speicherprogrammierbaren Steuerung zur Bestimmung und/oder Verwaltung der Zeitbereiche vorgesehen ist.

Unterschiedliche Zeitbereiche, in denen entweder nur die speicherprogrammierbare Steuerung oder das Simulationsprogramm auf einen Speicher zugreifen darf, dienen vorteilhaft der Erhöhung der Betriebssicherheit einer speicherprogrammierbaren Steuerung. Die Zeitbereiche werden anhand einer Zeit erstellt, die von einer Uhr, einem Taktgeber oder ähnlichem vorgegeben ist. Die Einteilung der Zeitbereiche erfolgt vorteilhaft durch das Betriebssystem der speicherprogrammierbaren Steuerung, wobei die Einteilung der Zeitbereiche auch nach Bedarf der auf den Speicher zugreifenden Einrichtungen (speicherprogrammierbare Steuerung, Recheneinheit, Engineeringsystem, Simulationsprogramm, Laufzeitumgebung der Recheneinheit sowie Betriebssystem der speicherprogrammierbaren Steuerung) erfolgen kann. So ist beispielsweise eine Einteilung denkbar, wobei diejenigen Zeitbereiche, in denen die speicherprogrammierbare Steuerung auf den Speicher zugreift, nach dem Programmablauf der speicherprogrammierbaren Steuerung und/oder der Anlage richtet.

Bei einer weiteren vorteilhaften Ausgestaltung unterstützt ein Synchronisationsmechanismus die Datenkonsistenz und/oder eine Synchronisierung einer Systemzeit der Recheneinheit und/oder der Systemzeit speicherprogrammierbaren Steuerung.

Der Synchronisationsmechanismus dient zur zeitlichen Synchronisierung der Prozesse in den verschiedenen vorstehend aufgeführten Einrichtungen. Beispiele für Prozesse sind die Kopier- oder Umwandlungen von dem Prozessabbild in das erweiterte Prozessabbild sowie Zugriffe auf den Speicher. Beispielsweise ist die Systemzeit eine Zeit der Recheneinheit.

Bei einer vorteilhaften Ausführung der Vorrichtung zur Steuerung einer Anlage ist der Synchronisationsmechanismus zur Verwaltung von Zugriffen aus dem Speicher vorgesehen.

Die Vorrichtung besteht vorteilhaft aus einer oder mehreren speicherprogrammierbaren Steuerungen, mindestens einer Anlage sowie ggf. mindestens einer Recheneinheit. Die Anlage und die Recheneinheit sind vorteilhaft über eine technische Datenverbindung mit der speicherprogrammierbaren Steuerung verbunden. Dabei kann die Recheneinheit auch in die speicherprogrammierbare Steuerung und/oder in die Anlage integriert sein. Zur Betriebssicherheit sowie zum Datentransfer und zur Steuerung des Datenverkehrs ist der Synchronisationsmechanismus vorgesehen, wobei die Zeit und/oder die Zeitpunke mittels der technischen Datenverbindung übertragen werden.

Bei einer vorteilhaften Ausgestaltung des Verfahrens dient dabei die virtuelle Sensorik zur Anpassung eines Programms zur Steuerung der Anlage durch die speicherprogrammierbare Steuerung und/oder zur Emulation und/oder zur Simulation einer Anlage.

Mittels der virtuellen Sensorik wird das Prozessabbild dergestalt erweitert, als seien die berechneten Sensorwerte durch Sensoren der Anlage bestimmt. Mittels des Prozessabbildes, welches die virtuelle Sensorik aufweist, ist so vorteilhaft eine effizientere Steuerung der Anlage durch die speicherprogrammierbare Steuerung ermöglicht. Die Sensorik dient beispielsweise zu einer Vorausschau oder Rückschau, wobei anhand von einer Vorschau oder einer Rückschau die Steuerung der Anlage vorteilhaft modifiziert wird. So kann beispielsweise ein drohender Stau in einem Teil der Anlage durch eine Verlangsamung eines weiteren Prozesses, insbesondere in einem anderen Teil der Anlage, verhindert werden. Dies dient der vorteilhaft einer Verhinderung eines kostspieligen Ausfalls der Anlage.

Um nicht das gesamte Prozessabbild mittels der Umwandlungsroutine in das erweiterte Prozessabbild umzuwandeln sowie nicht das gesamte erweiterte Prozessabbild von der speicherprogrammierbaren Steuerung in die Recheneinheit zu übertragen, ist eine Auswahl der relevanten Teile des Prozessabbildes zur Umwandlung sowie eine Auswahl der relevanten Teile des erweiterten Prozessabbildes vorteilhaft. Eine Auswahl des relevanten Anteils der Daten vermindert den Datenfluss durch die Umwandlungsroutine sowie durch die technische Datenverbindung. So können Kosten in der Herstellung der speicherprogrammierbaren Steuerung eingespart werden.

Die Auswahl der relevanten Daten erfolgt, vorteilhaft gestützt von einem Projektierungswerkzeug, durch den Anwender. Die Auswahl gibt dem Anwender die größtmögliche Freiheit und, insbesondere durch die Unterstützung des Projektierungswerkzeuges, vereinfacht die Entwicklung oder Programmierung der speicherprogrammierbaren Steuerung.

Vorteilhaft ist, insbesondere für den unerfahrenen Anwender, ein Modus der Entwicklungsumgebung der speicherprogrammierbaren Steuerung und/oder des Simulationsprogramms, in welchem die Auswahl der Teile des Prozessabbildes und/oder des erweiterten Prozessabbildes vollständig durch das Projektierungswerkzeug erfolgt.

Vorteilhaft sind die Prozessabbilder und/oder die erweiterten Prozessabbilder und/oder die Veränderung der Prozessabbilder zur Ausgabe durch eine Ausgabeeinheit vorgesehen.

Als Ausgabeeinheit ist regelmäßig ein Bildschirm zu verstehen, der entweder über einen Computer oder direkt mit der speicherprogrammierbaren Steuerung verbunden ist. Als weitere Ausgabeeinheit ist auch ein Drucker, ein Signalgeber bei Abweichungen einzelner Werte von Sollwerten des Prozessabbildes denkbar. Eine in eine graphische Darstellung konvertierte Ausgabeform ist insbesondere für die Ausgabe auf einem Bildschirm vorteilhaft. So kann der Anwender den Ablauf der Anlage einfach überblicken und/oder überwachen. Weiter ist dem Anwender bei einem Betrieb oder einer Simulation der Anlage eine einfach verständliche Darstellung des Betriebsablaufs einer Anlage möglich. So kann auch gering qualifiziertes Personal die Anlage bedienen.

Weiter vorteilhaft erfolgt der Zugriff auf den Speicher durch die speicherprogrammierte Steuerung und/oder durch das Simulationsprogramm jeweils nur während bestimmten Zeitbereichen, wobei das Betriebssystem der speicherprogrammierbaren Steuerung zur Verwaltung der Zeitbereiche vorgesehen ist.

Der Zugriff auf den Speicher der speicherprogrammierbaren Steuerung erfolgt vorteilhaft durch Funktionselementen der speicherprogrammierbaren Steuerung, insbesondere durch einen Mikroprozessor derselben. Weiter besitzt vorteilhaft auch das Simulationsprogramm durch die Recheneinheit über die technische Datenverbindung Zugriffsrechte auf den Speicher der speicherprogrammierbaren Steuerung. Die Verwaltung der Zugriffsrechte übernimmt vorteilhaft das Betriebssystem der speicherprogrammierbaren Steuerung. Das Betriebssystem verwaltet insbesondere die einzelnen Bereiche des Speichers sowie die zeitlich Abfolge des Zugriffs auf die einzelnen Bereiche des Speichers.

Unter Speicher versteht man insbesondere einen RAM-Speicher, einen ROM-Speicher sowie einen oder mehrere Speicherbausteine, die zusammen oder getrennt ansprechbar sind.

Der Speicher kann auch in einer Recheneinheit oder einem Computer integriert sein. Zusätzlich eignet sich ein, mit der speicherprogrammierbaren Steuerung verbundenes, Speicherelement wie eine SD-Speicherkarte.

Die zeitliche Synchronisierung der Speicherzugriffe erfolgt vorteilhaft über einen Taktgeber oder eine Uhr, welche ein Zeitsignal aussendet. Die Synchronisation erfolgt vorteilhaft global, d.h. die speicherprogrammierbare Steuerung wie auch die Recheneinheit und/oder das Laufzeitsystem der Recheneinheit werden mit dem gleichen Signal getaktet. Eine Übertragung des Zeitsignals/Taktsignals erfolgt vorteilhaft über eine technische Datenverbindung.

In einer weiteren vorteilhaften Ausgestaltung des Verfahrens werden die Daten über die technische Datenverbindung übertragen, die ggf. in einem Interface zur Übertragung an die Recheneinheit umformatiert werden.

Eine Übertragung von Daten von der speicherprogrammierbaren Steuerung zur Recheneinheit und von der Recheneinheit zur speicherprogrammierbaren Steuerung erfolgt durch die technische Datenverbindung. Die Verbindung der technischen Datenverbindung zur Recheneinheit und so zum Simulationsprogramm erfolgt vorteilhaft mittels des Interfaces. Das Interface stellt die Schnittstelle von dem Simulationsprogramm und der speicherprogrammierbaren Steuerung, insbesondere über die technische Datenverbindung, dar. Beispiele für eine technische Datenverbindung sind ein PROFIBUS DP, ein PROFINET IO, eine USB-Verbindung, eine GPIB-Verbindung oder eine RS232-Verbindung. In einer Ausführungsform, in der die Recheneinheit in der speicherprogrammierbaren Steuerung integriert ist, entfallen ggf. die technische Datenverbindung und/oder das Interface sowie die Schnittstellen.

Durch die zeitliche Synchronisierung der speicherprogrammierbare Steuerung und des Simulationsprogramms ist weiter das Feld einer Echtzeit-Anwendung eröffnet. Ein Beispiel für eine Echtzeitberechnung ist die Berechnung des Füllstandes in einem Gefäß der Anlage und die gleichzeitige Ausrichtung von Materialströmen anhand von dem Füllstand.

Im Folgenden wird die Erfindung anhand der in den Figuren dargestellten Ausführungsbeispiele näher beschrieben und erläutert. Es zeigen:
- FIG 1: die speicherprogrammierbare Steuerung sowie ein Schema des Datenverkehrs,
- FIG 2: ein Schema des Datenverkehrs und den Speicher gesondert.

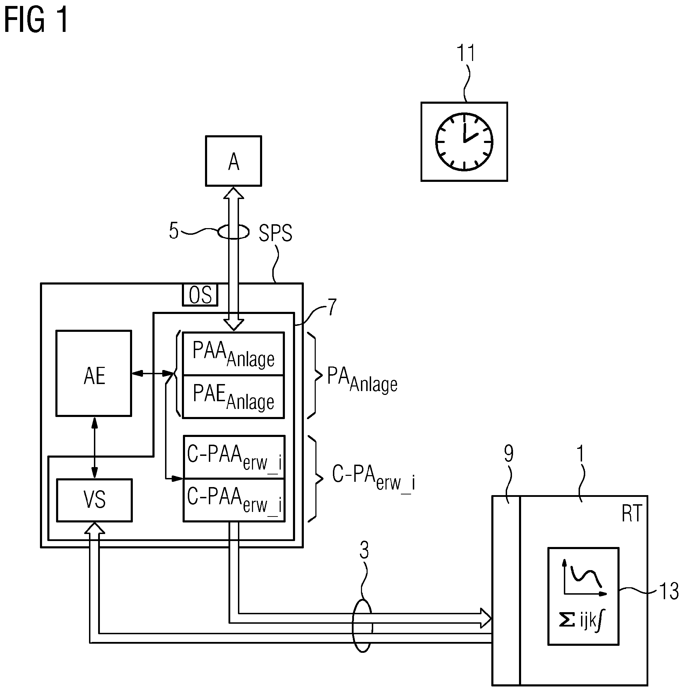

FIG 1 zeigt die speicherprogrammierbare Steuerung SPS sowie ein Schema des Datenverkehrs. Die speicherprogrammierbare Steuerung SPS kommuniziert über eine weitere technische Datenverbindung 5 mit der Anlage A. Die speicherprogrammierbare Steuerung SPS ist mit den Motoren und Sensoren der Anlage A verbunden und steuert die Anlage A. Zur Steuerung der Anlage A durch die speicherprogrammierbare Steuerung SPS dient das Prozessabbild PA_{Anlage}. Das Prozessabbild teilt sich in ein eingehendes Prozessabbild PAE_{Anlage} und ein ausgehendes Prozessabbild PAA_{Anlage} auf. Das eingehende Prozessabbild PAE_{Anlage} enthält beispielsweise Stellungen von Aktoren der Anlage A und/oder Sensorwerte. Das ausgehende Prozessabbild PAA_{Anlage} enthält beispielsweise Befehle zur Ansteuerung einer elektrischen Maschine der Anlage A.

Das Prozessabbild PA_{Anlage}, PAA_{Anlage}, PAE_{Anlage} wird durch die Ausführungsebene AE erzeugt, modifiziert und vorteilhaft auch angezeigt. Vorteilhaft dient zur Anzeige ein Bildschirm als Teil der Ausführungsebene AE. Das Prozessabbild PA_{Anlage}, PAA_{Anlage}, PAE_{Anlage} wird zumindest teilweise einmal oder mehrmals in den Speicher 7 der speicherprogrammierbaren Steuerung SPS kopiert. Die Kopie des Prozessabbildes PA_{Anlage}, PAA_{Anlage}, PAE_{Anlage} ist das erweiterte Prozessabbild c-PA_{erw_i}, c-PAA_{erw_i}, c-PAE_{erw_i}. Dabei weist das erweiterte Prozessabbild c-PA_{erw_i}, c-PAA_{erw_i}, c-PAE_{erw_i} vorteilhaft auch Kopien von Anteilen des jeweiligen Prozessabbildes PA_{Anlage}, PAA_{Anlage}, PAE_{Anlage} auf. Dabei bezeichnet c-PA_{erw_i} die i-te Kopie des Prozessabbildes PA_{Anlage}, PAA_{Anlage}, PAE_{Anlage}, wobei vorteilhaft die Kopie in einem dafür vorgesehenen Bereich des Speichers 7 der speicherprogrammierbaren Steuerung SPS abgespeichert ist. Das erweiterte Prozessabbild c-PA_{erw_i}, c-PAA_{erw_i}, c-PAE_{erw_i} ist zur Übertragung an das Simulationsprogramm 13 vorgesehen. Dabei können unterschiedliche Teile des erweiterten Prozessabbildes c-PA_{erw_i}, c-PAA_{erw_i}, c-PAE_{erw_i} von verschiedenen Simulationsprogrammen 13 und/oder unterschiedlichen Simulationsroutinen eines Simulationsprogramms 13 zugeordnet sein. Eine Simulationsroutine ist hier ein Teil eines Simulationsprogramms 13, wobei unterschiedliche Simulationsroutinen vorteilhaft unterschiedliche virtuelle Senoriken VS, ggf. mittels unterschiedlichen Berechnungsverfahren ermitteln. Das Simulationsprogramm ist auf einer Recheneinheit 1 installiert. Die Recheneinheit 1 ist durch eine technische Datenverbindung 3 mit dem Speicher 7 der speicherprogrammierbaren Steuerung SPS verbunden. Das Simulationsprogramm 13 läuft vorteilhaft auf einer Laufzeitumgebung RT. Die Laufzeitumgebung RT ersetzt das Betriebssystem der Recheneinheit 1 oder dient als Schnittstelle zwischen dem Betriebssystem der Recheneinheit 1 und dem Simulationsprogramm 13. Als Schnittstelle zwischen dem Speicher 7 und dem Simulationsprogramm 13 weist die Recheneinheit 1 vorteilhaft ein Interface 9 auf. Mittels des Simulationsprogramms 13 wird die virtuelle Sensorik VS berechnet. Die virtuelle Sensorik VS wird über die technische Datenverbindung 3 in den Speicher 7 der speicherprogrammierbaren Steuerung SPS übertragen. Dort steht die virtuelle Sensorik VS der Ausführungsebene AE zur Verfügung und kann vorteilhaft in das Prozessabbild PA_{Anlage}, PAA_{Anlage}, PAE_{Anlage} eingefügt werden. Zum Betrieb der vorstehend aufgeführten datentechnischen Vorgänge in der speicherprogrammierbaren Steuerung SPS dient ein Betriebssystem OS der speicherprogrammierbaren Steuerung SPS. Vorteilhaft ist auch eine Integration der Recheneinheit 1 in die speicherprogrammierbare Steuerung SPS oder eine Integration der speicherprogrammierbare Steuerung SPS in die Recheneinheit 1 vorteilhaft. Zur Synchronisation der Prozesse in der Recheneinheit 1 und/oder der speicherprogrammierbaren Steuerung SPS und/oder der Ausführungsebene AE dient ein Taktgeber oder eine elektronische Uhr 11.

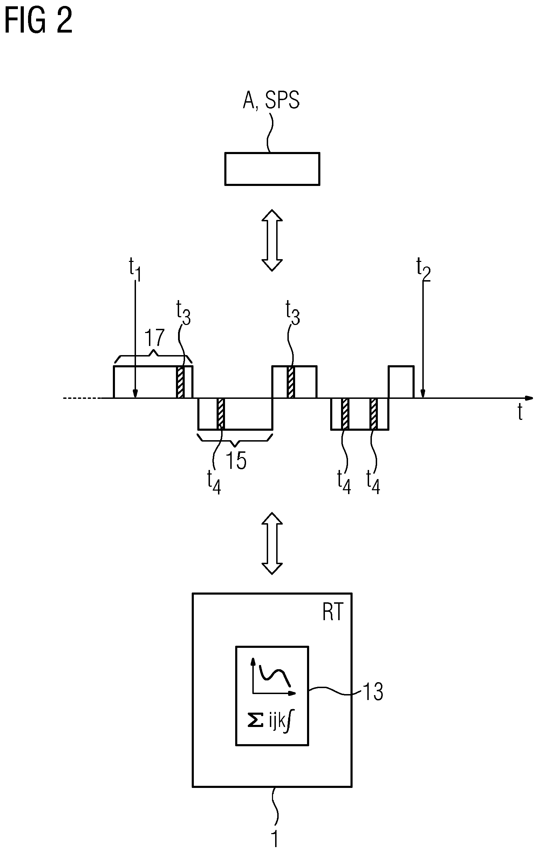

FIG 2 zeigt ein Schema des Datenverkehrs und den Speicher gesondert. Die Figur zeigt einen Verlauf einer Zeit t, wobei die Zeit t Zeitbereiche 13, 15 aufweist. Unterhalb des Pfeils, der die Zeit t symbolisiert, gibt es Zeitbereiche 15, in dem das Simulationsprogramm 13 und/oder die Recheneinheit 1 auf den Speicher 7 zugreift oder zugreifen darf. Oberhalb des Pfeils, der die Zeit t symbolisiert, gibt es weitere Zeitbereiche 17, in denen die speicherprogrammierbare Steuerung SPS auf den Speicher 7 zugreift oder zugreifen darf. Die Zeitbereiche 15, in denen das Simulationsprogramm 13 oder die Recheneinheit 1 auf den Speicher 7 zugreifen darf, sind durch den Doppelpfeil auf die Recheneinheit 1 / das Simulationsprogramm 13 dargestellt. Die weiteren Zeitbereiche 17, in denen die Anlage 1 auf den Speicher zugreifen darf, sind durch den Doppelpfeil auf die Anlage 1 dargestellt.

Der Zeitpunkt t₁ kennzeichnet den Zeitpunkt, an dem ein periodischer Durchlauf der Anlage A beginnt. Der Zeitpunkt t₂ kennzeichnet einen Zeitpunkt, an dem der periodische Durchlauf der Anlage A endet. Die Zeitpunkte t₃ kennzeichnen die Zeitpunkte, in denen die Anlage A und/oder die speicherprogrammierbare Steuerung SPS auf den Speicher 7 zugreift, beispielsweise zum Lesen oder Schreiben eines Prozessabbildes PA_{Anlage}, PAA_{Anlage}, PAE_{Anlage}. Die Zeitpunkte t₄ kennzeichnen die Zeitpunkte, in denen die Recheneinheit 1 und/oder das Simulationsprogramm 13 auf den Speicher lesend oder schreibend zugreift. Die Zeitpunkte t₁, t₂, t₃, t₄ kennzeichnen den Beginn oder das Ende des Zugriffs auf den Speicher, wobei der Zugriff auf den Speicher kurz im Vergleich zu den Zeitbereichen 13, 15 ist, in denen die Anlage A oder das Simulationsprogramm lesend und/oder schreibend auf den Speicher 7 zugreifen darf. Zur Einteilung der Zeit t in die Zeitbereiche 17, in denen die Anlage A und/oder die speicherprogrammierbare Steuerung SPS auf den Speicher 7 zum Zugriff berechtigt ist und in die weiteren Zeitbereiche 17, in denen die Recheneinheit 1 und/oder das Simulationsprogramm 13 auf den Speicher 7 zum Zugriff berechtigt ist, erfolgt vorteilhaft durch das Betriebssystem der speicherprogrammierbaren Steuerung SPS. Die Zeit wird vorteilhaft durch die elektronische Uhr 11 oder einem Taktgeber oder eine andere Einheit bereitgestellt.

Weiter wird ein vorteilhaftes Verfahren zum Betrieb und/oder einer hier beschriebenen speicherprogrammierbaren Steuerung beschrieben:
1. Die Programmierung der speicherprogrammierbaren Steuerung SPS (Engineering-Phase) erfolgt insbesondere mittels einer Integration der virtuellen Sensorik VS in die Programmierung durch den Anwender. Die Integration der virtuellen Sensorik VS findet vorteilhaft in der gewohnten Arbeitsumgebung des Anwenders der speicherprogrammierbaren Steuerung SPS statt. Vorteilhaft unterstützt ein Hardware-Katalog und/oder es findet die Einbindung einer GSD-Datei während der Programmierung statt. Dabei erfolgt die Sicherstellung der Konsistenz der Daten vorteilhaft im Hintergrund, beispielsweise durch ein Projektierungswerkzeug.
2. Während der Betriebsphase liest das Simulationsprogramm 13, insbesondere in regelmäßigen wiederkehrenden Zeitpunkten t₁, t₂, t₃, t₄ das erweiterte Prozessabbild c-PA_{erw_i} c-PAA_{erw_i}, c-PAE_{erw_i} und generiert gemäß von Vorgaben die virtuelle Sensorik VS. Vorteilhaft schreibt das Simulationsprogramm 13 die virtuelle Sensorik VS direkt in den Speicher 7 der speicherprogrammierbaren Steuerung SPS.

Der Datenaustausch zwischen der speicherprogrammierbaren Steuerung SPS und der Recheneinheit 1 erfolgt insbesondere durch das Betriebssystem OS der speicherprogrammierbaren Steuerung SPS und dem Laufzeitsystem RT auf der Recheneinheit 1 in synchronisierter Weise unter Sicherstellung der Datenkonsistenz und der zeitlichen Vorgaben, insbesondere mittels bekannter Synchronisationsmechanismen. Die Kommunikation der speicherprogrammierbaren Steuerung SPS und der Recheneinheiten 1 erfolgt durch die technische Datenverbindung 5, beispielsweise mittels PROFINET IO IRT.

Als Beispiel ist der vorstehend vorgestellte Betriebsablauf zu einer die Verringerung der realen Bandsollgeschwindigkeit der Anlage A als Reaktion auf berechnete weitere Daten. Ein Beispiel für eine virtuelle Sensorik VS sind die Ausgangsdaten eines virtuellen Stausensors oder die Anpassung einer Trajektorie aufgrund eines mit einer Vorausberechnung (lookahead) ermittelten Positionswertes eines Aktors der Anlage A.

Zusammenfassend betrifft die Erfindung eine speicherprogrammierbare Steuerung SPS, insbesondere zur Steuerung einer Anlage A. Die speicherprogrammierbare Steuerung SPS ist durch ein Simulationsprogramm 13 ergänzt, wobei das Simulationsprogramm 13 ggf. auf einer Recheneinheit 1 abläuft, wobei die speicherprogrammierbare Steuerung SPS und die Recheneinheit 1 über eine technische Datenverbindung 5 kommunizieren. Prozessabbilder PA_{Anlage}, PAA_{Anlage}, PAE_{Anlage} werden in der speicherprogrammierbaren Steuerung SPS in erweiterte Prozessabbilder c-PA_{erw} c-PAA_{erw_i}, c-PAE_{erw_i} umgewandelt und diese im Speicher 7 der speicherprogrammierbaren Steuerung SPS gespeichert. Weiter hat das Simulationsprogramm 13 auf den Speicher 7 Zugriff über das Betriebssystem OS der speicherprogrammierbaren Steuerung SPS und schreibt die virtuelle Sensorik VS, in den Speicher 7. Die virtuelle Sensorik VS dient vorteilhaft zur Anpassung eines Programms der speicherprogrammierbaren Steuerung SPS und so zur Steuerung und/oder Regelung der Anlage A.

## Patentansprüche

1. Speicherprogrammierbare Steuerung (SPS), insbesondere zur Steuerung einer Anlage (A), aufweisend einen Speicher (7), wobei die speicherprogrammierbare Steuerung (SPS) mit der Anlage (A) über eine technische Datenverbindung (5) verbindbar ist, wobei die speicherprogrammierbare Steuerung (SPS) über eine weitere technische Datenverbindung (3) mit einer Recheneinheit (1) verbindbar ist, wobei auf der Recheneinheit (1) ein Simulationsprogramm (13) lauffähig ist,
- wobei die speicherprogrammierbare Steuerung (SPS) ein Prozessabbild (PA_{Anlage}, PAA_{Anlage}, PAE_{Anlage}) der Anlage (A) aufweist, wobei das Prozessabbild (PA_{Anlage}, PAA_{Anlage}, PAE_{Anlage}) aus einem Eingangsprozessabbild sowie einem Ausgangsprozessabbild besteht, wobei das Eingangsprozessabbild von der Anlage (A) zur speicherprogrammierbaren Steuerung (SPS) übertragen wird und ermittelte Sensordaten und/ oder mittels Sensoren auslesbare Stellungen von Aktoren und/ oder gemessene Betriebsgrößen elektrischer Maschinen der Anlage (A) enthält, und wobei das Ausgangsprozessabbild von der speicherprogrammierbaren Steuerung (SPS) zur Anlage (A) übertragen wird und Befehle zur Stellung von Aktoren und/ oder Befehle zur Aktivierung von Sensoren enthält,
- wobei ein erweitertes Prozessabbild (c-PA_{erw_i} c-PAA_{erw_i}, c-PAE_{erw_i}) mindestens eine Kopie des Prozessabbilds (PA_{Anlage}, PAA_{Anlage}, PAE_{Anlage}) aufweist,
- wobei der Speicher (7) zur Speicherung des erweiterten Prozessabbildes (c-PA_{erw_i} c-PAA_{erw_i}, c-PAE_{erw_i}) und des Prozessabbildes (PA_{Anlage}, PAA_{Anlage}, PAE_{Anlage}) vorgesehen ist,
- wobei das erweiterte Prozessabbild (c-PA_{erw_i} c-PAA_{erw_i}, c-PAE_{erw_i}) für das Simulationsprogramm (13) vorgesehen ist, wobei das erweiterte Prozessabbild (c-PA_{erw_i} c-PAA_{erw_i}, c-PAE_{erw_i}) in einem Datenformat vorliegt, welches von dem Simulationsprogramm (13) verarbeitet wird, wobei das Simulationsprogramm (13) zur Berechnung einer virtuellen Sensorik (VS) aus dem erweiterten Prozessabbild (c-PA_{erw_i} c-PAA_{erw_i}, c-PAE_{erw_i}) vorgesehen ist,
- wobei das Betriebssystem (OS) der speicherprogrammierbaren Steuerung (SPS) zur Verwaltung des Speichers (7) vorgesehen ist,
- wobei mittels der virtuellen Sensorik (VS) das Prozessabbild (PA_{Anlage}, PAA_{Anlage}, PAE_{Anlage}) dergestalt zu einem um die virtuelle Sensorik (VS) erweiterten Prozessabbild (PA_{Anlage}, PAA_{Anlage}, PAE_{Anlage}) erweitert wird, als seien durch das Simulationsprogramm (13) berechnete Sensorwerte durch Sensoren der Anlage (A) bestimmt, und wobei das um die virtuelle Sensorik (VS) erweiterte Prozessabbild (PA_{Anlage}, PAA_{Anlage}, PAE_{Anlage}) zur Steuerung der Anlage (A) durch die speicherprogrammierbare Steuerung (SPS) vorgesehen ist.

2. Speicherprogrammierbare Steuerung (SPS) nach Anspruch 1, wobei das erweiterte Prozessabbild (c-PA_{erw_i} c-PAA_{erw_i}, c-PAE_{erw_i}) aus mehreren Kopien des Prozessabbildes (PA_{Anlage}, PAA_{Anlage}, PAE_{Anlage}) besteht.

3. Speicherprogrammierbare Steuerung (SPS) nach einem der vorangehenden Ansprüche, wobei zur Unterstützung einer Bereitstellung des erweiterten Prozessabbildes (c-PA_{erw_i} c-PAA_{erw_i}, c-PAE_{erw_i}) sowie der virtuellen Sensorik (VS) ein Engineeringsystem vorgesehen ist.

4. Speicherprogrammierbare Steuerung (SPS) nach einem der vorangehenden Ansprüchen, wobei das erweiterte Prozessabbild (c-PA_{erw_i} c-PAA_{erw_i}, c-PAE_{erw_i}) für einen Anwender nicht sichtbar ist.

5. Speicherprogrammierbare Steuerung (SPS) nach einem der vorangehenden Ansprüche, wobei eine Modifikation des Prozessabbildes (PA_{Anlage}, PAA_{Anlage}, PAE_{Anlage}), des erweiterten Prozessabbildes (c-PA_{erw_i} c-PAA_{erw_i}, c-PAE_{erw_i}) und/oder der virtuellen Sensorik (VS) zu vorgebbaren Zeitpunkten (t₁, t₂, t₃, t₄) und/oder zu Zeitpunkten (t₁, t₂, t₃, t₄), die sich aus einem Betrieb der Anlage (A) und/oder der Recheneinheit (1) ergeben, vorgesehen ist.

6. Speicherprogrammierbare Steuerung (SPS) nach einem der vorangehenden Ansprüche, wobei ein Engineeringsystem zur Auswahl des erweiterten Prozessabbildes (c-PA_{erw_i} c-PAA_{erw_i}, c-PAE_{erw_i}) und/oder der virtuellen Sensorik (VS) vorgesehen ist.

7. Speicherprogrammierbare Steuerung (SPS) nach einem der vorangehenden Ansprüche, wobei eine Ausführungsebene (AE) zur Modifikation von Vorgängen in der speicherprogrammierbaren Steuerung unter Berücksichtigung der virtuellen Sensorik (VS) und/oder dem Prozessabbild (PA_{Anlage}, PAA_{Anlage}, PAE_{Anlage}) vorgesehen ist und wobei sich das erweiterte Prozessabbild von außerhalb der speicherprogrammierbaren Steuerung wie ein Prozessabbild (PA_{Anlage}, PAA_{Anlage}, PAE_{Anlage}) verhält.

8. Speicherprogrammierbare Steuerung (SPS) nach einem der vorangehenden Ansprüche, wobei der Zugriff auf den Speicher (7) durch die speicherprogrammierbare Steuerung (SPS) und/oder durch das Simulationsprogramm (13) jeweils nur während bestimmten Zeitbereichen (15, 17) erfolgt und wobei das Betriebssystem (OS) der speicherprogrammierbaren Steuerung (SPS) zur Bestimmung und/oder Verwaltung der Zeitbereiche (15, 17) vorgesehen ist.

9. Verfahren zur Steuerung einer speicherprogrammierbaren Steuerung (SPS), wobei die speicherprogrammierbare Steuerung (SPS) ein Prozessabbild (PA_{Anlage}, PAA_{Anlage}, PAE_{Anlage}) von der zu steuernden Anlage (A) erhält, wobei das Prozessabbild (PA_{Anlage}, PAA_{Anlage}, PAE_{Anlage}) aus einem Eingangsprozessabbild sowie einem Ausgangsprozessabbild besteht, wobei das Eingangsprozessabbild von der Anlage (A) zur speicherprogrammierbaren Steuerung (SPS) übertragen wird und ermittelte Sensordaten und/ oder mittels Sensoren auslesbare Stellungen von Aktoren und/ oder gemessene Betriebsgrößen elektrischer Maschinen der Anlage (A) enthält, und wobei das Ausgangsprozessabbild von der speicherprogrammierbaren Steuerung (SPS) zur Anlage (A) übertragen wird und Befehle zur Stellung von Aktoren und/ oder Befehle zur Aktivierung von Sensoren enthält,
wobei das Prozessabbild (PA_{Anlage}, PAA_{Anlage}, PAE_{Anlage}) in ein erweitertes Prozessabbild (c-PA_{erw_i} c-PAA_{erw_i}, c-PAE_{erw_i}) kopiert wird, wobei das erweiterte Prozessabbild (c-PA_{erw_i} c-PAA_{erw_i}, c-PAE_{erw_i}) in einem Speicher (7) abgespeichert wird, wobei ein Simulationsprogramm (13) auf einer Recheneinheit (1) das erweiterte Prozessabbild (PAE) erhält, wobei das erweiterte Prozessabbild (c-PA_{erw_i} c-PAA_{erw_i}, c-PAE_{erw_i}) in einem Datenformat vorliegt, welches von dem Simulationsprogramm (13) verarbeitet wird, wobei das Simulationsprogramm (13) aus dem erweiterten Prozessabbild (c-PA_{erw_i} c-PAA_{erw_i}, c-PAE_{erw_i}) eine virtuelle Sensorik (VS) berechnet und diese im Speicher (7) der speicherprogrammierbaren Steuerung (SPS) abspeichert, wobei das Betriebssystem (OS) der speicherprogrammierbaren Steuerung (SPS) den Zugriff auf den Speicher (7) verwaltet, wobei mittels der virtuellen Sensorik (VS) das Prozessabbild (PA_{Anlage}, PAA_{Anlage}, PAE_{Anlage}) dergestalt zu einem um die virtuelle Sensorik (VS) erweiterten Prozessabbild (PA_{Anlage}, PAA_{Anlage}, PAE_{Anlage}) erweitert wird, als seien durch das Simulationsprogramm (13) berechnete Sensorwerte durch Sensoren der Anlage (A) bestimmt, und wobei die Anlage (A) durch das um die virtuelle Sensorik (VS) erweiterte Prozessabbild (PA_{Anlage}, PAA_{Anlage}, PAE_{Anlage}) durch die speicherprogrammierbare Steuerung (SPS) gesteuert wird.

10. Verfahren nach Anspruch 9, wobei die virtuelle Sensorik (VS) zur Anpassung eines Programms zur Steuerung der Anlage (A) durch die speicherprogrammierbare Steuerung (SPS) und/ oder zur Emulation und/oder zur Simulation einer Anlage (A) dient.

11. Anlage (A), aufweisend eine speicherprogrammierbare Steuerung (SPS) nach einem der Ansprüche 1 bis 8.

## Claims

1. Programmable logic controller (SPS), in particular for controlling an installation (A), comprising a memory (7), wherein the programmable logic controller (SPS) is connectable to the installation (A) by means of a technical data link (5), wherein the programmable logic controller (SPS) is connectable to a computing unit (1) by means of a further technical data link (3), wherein a simulation program (13) is executable on the computing unit (1),
- wherein the programmable logic controller (SPS) has a process image (PA_{Anlage}, PAA_{Anlage}, PAE_{Anlage}) of the installation (A), the process image (PA_{Anlage}, PAA_{Anlage}, PAE_{Anlage}) consisting of a process input image and a process output image, the process input image being transferred from the installation (A) to the programmable logic controller (SPS) and containing determined sensor data and/or positions of actuators that are readable by means of sensors and/or measured operating variables of electric machines of the installation (A), and the process output image being transferred from the programmable logic controller (SPS) to the installation (A) and containing commands for positioning actuators and/or commands for activating sensors,
- wherein an extended process image (c-PA_{erw_i}, c-PAA_{erw_i}, c-PAE_{erw_i}) has at least one copy of the process image (PA_{Anlage}, PAA_{Anlage}, PAE_{Anlage}),
- wherein the memory (7) is provided for storing the extended process image (c-PA_{erw_i}, c-PAA_{erw_i}, c-PAE_{erw_i}) and the process image (PA_{Anlage}, PAA_{Anlage}, PAE_{Anlage}),
- wherein the extended process image (c-PA_{erw_i}, c-PAA_{erw_i}, c-PAE_{erw_i}) is provided for the simulation program (13), the extended process image (c-PA_{erw_i}, c-PAA_{erw_i}, c-PAE_{erw_i}) being available in a data format that is processed by the simulation program (13), the simulation program (13) being provided for calculating a virtual sensor system (VS) from the extended process image (c-PA_{erw_i}, c-PAA_{erw_i}, c-PAE_{erw_i}),
- wherein the operating system (OS) of the programmable logic controller (SPS) is provided for managing the memory (7),
- wherein the virtual sensor system (VS) is used to extend the process image (PA_{Anlage}, PAA_{Anlage}, PAE_{Anlage}) to a process image (PA_{Anlage}, PAA_{Anlage}, PAE_{Anlage}) that has been extended by the virtual sensor system (VS), to such an extent as if sensor values calculated by the simulation program (13) were determined by sensors of the installation (A), and wherein the process image (PA_{Anlage}, PAA_{Anlage}, PAE_{Anlage}) extended by the virtual sensor system (VS) is provided for controlling the installation (A) by the programmable logic controller (SPS).

2. Programmable logic controller (SPS) according to Claim 1, wherein the extended process image (c-PA_{erw_i}, c-PAA_{erw_i}, c-PAE_{erw_i}) consists of a plurality of copies of the process image (PA_{Anlage}, PAA_{Anlage}, PAE_{Anlage}).

3. Programmable logic controller (SPS) according to either of the preceding claims, wherein an engineering system is provided for assisting with the provision of the extended process image (c-PA_{erw_i}, c-PAA_{erw_i}, c-PAE_{erw_i}) and the virtual sensor system (VS).

4. Programmable logic controller (SPS) according to any one of the preceding claims, wherein the extended process image (c-PA_{erw_i}, c-PAA_{erw_i}, c-PAE_{erw_i}) is not visible to a user.

5. Programmable logic controller (SPS) according to any one of the preceding claims, wherein provision is made for a modification of the process image (PA_{Anlage}, PAA_{Anlage}, PAE_{Anlage}), of the extended process image (c-PA_{erw_i}, c-PAA_{erw_i}, c-PAE_{erw_i}) and/or of the virtual sensor system (VS) at specifiable times (t₁, t₂, t₃, t₄) and/or at times (t₁, t₂, t₃, t₄) that arise from an operation of the installation (A) and/or the computing unit (1) .

6. Programmable logic controller (SPS) according to any one of the preceding claims, wherein an engineering system is provided for selecting the extended process image (c-PA_{erw_i}, c-PAA_{erw_i}, c-PAE_{erw_i}) and/or the virtual sensor system (VS) .

7. Programmable logic controller (SPS) according to any one of the preceding claims, wherein an execution level (AE) is provided for modifying procedures in the programmable logic controller while taking account of the virtual sensor system (VS) and/or the process image (PA_{Anlage}, PAA_{Anlage}, PAE_{Anlage}) and wherein the extended process image behaves like a process image (PA_{Anlage}, PAA_{Anlage}, PAE_{Anlage}) from outside of the programmable logic controller.

8. Programmable logic controller (SPS) according to any one of the preceding claims, wherein the access to the memory (7) by the programmable logic controller (SPS) and/or by the simulation program (13) is only implemented during certain time intervals (15, 17) in each case and wherein the operating system (OS) of the programmable logic controller (SPS) is provided for determining and/or managing the time intervals (15, 17).

9. Method for controlling a programmable logic controller (SPS), wherein the programmable logic controller (SPS) receives a process image (PA_{Anlage}, PAA_{Anlage}, PAE_{Anlage}) from the installation (A) to be controlled, wherein the process image (PA_{Anlage}, PAA_{Anlage}, PAE_{Anlage}) consists of a process input image and a process output image, wherein the process input image is transferred from the installation (A) to the programmable logic controller (SPS) and contains determined sensor data and/or positions of actuators that are readable by means of sensors and/or measured operating variables of electric machines of the installation (A), and wherein the process output image is transferred from the programmable logic controller (SPS) to the installation (A) and contains commands for positioning actuators and/or commands for activating sensors,
wherein the process image (PA_{Anlage}, PAA_{Anlage}, PAE_{Anlage}) is copied into an extended process image (c-PA_{erw_i}, c-PAA_{erw_i}, c-PAE_{erw_i}), wherein the extended process image (c-PA_{erw_i}, c-PAA_{erw_i}, c-PAE_{erw_i}) is stored in a memory (7), wherein a simulation program (13) on a computing unit (1) receives the extended process image (PAE), wherein the extended process image (c-PA_{erw_i}, c-PAA_{erw_i}, c-PAE_{erw_i}) is available in a data format that is processed by the simulation program (13), wherein the simulation program (13) calculates a virtual sensor system (VS) from the extended process image (c-PA_{erw_i}, c-PAA_{erw_i}, c-PAE_{erw_i}) and stores said virtual sensor system in the memory (7) of the programmable logic controller (SPS), wherein the operating system (OS) of the programmable logic controller (SPS) manages the access to the memory (7), wherein the process image (PA_{Anlage}, PAA_{Anlage}, PAE_{Anlage}) is extended by means of the virtual sensor system (VS) into a process image (PA_{Anlage}, PAA_{Anlage}, PAE_{Anlage}) that has been extended by the virtual sensor system (VS), to such an extent as if sensor values calculated by the simulation program (13) were determined by sensors of the installation (A), and wherein the installation (A) is controlled by way of the programmable logic controller (SPS) by the process image (PA_{Anlage}, PAA_{Anlage}, PAE_{Anlage}) extended by the virtual sensor system (VS) .

10. Method according to Claim 9, wherein the virtual sensor system (VS) serves to adapt a program for controlling the installation (A) by the programmable logic controller (SPS) and/or to emulate and/or simulate an installation (A).

11. Installation (A), comprising a programmable logic controller (SPS) according to any one of Claims 1 to 8.

## Revendications

1. Commande programmable par une mémoire (SPS), destinée en particulier à la commande d'une installation (A), présentant une mémoire (7), dans laquelle la commande programmable par une mémoire (SPS) peut être connectée à l'installation (A) par l'intermédiaire d'une connexion technique de données (5), dans laquelle la commande programmable par une mémoire (SPS) peut être connectée à une unité informatique (1) par l'intermédiaire d'une connexion technique de données supplémentaire (3), dans laquelle un programme de simulation (13) est capable de fonctionner sur l'unité informatique (1),
- dans laquelle la commande programmable par une mémoire (SPS) présente une image de processus (PA_{Anlage}, PAA_{Anlage}, PAE_{Anlage}) de l'installation (A), dans laquelle l'image de processus (PA_{Anlage}, PAA_{Anlage}, PAE_{Anlage}) se compose d'une image de processus d'entrée ainsi que d'une image de processus de sortie, dans laquelle l'image de processus d'entrée est transmise de l'installation (A) à la commande programmable par une mémoire (SPS) et contient des données de capteur déterminées et/des positions d'actionneurs lisibles au moyen de capteurs et/ou des grandeurs d'exploitation de machines électriques de l'installation (A), et dans laquelle l'image de processus de sortie est transmise de la commande programmable par une mémoire (SPS) à l'installation (A) et contient des instructions destinées à la position d'actionneurs et/ou des instructions destinées à l'activation de capteurs,
- dans laquelle une image de processus élargie (c-PA_{erw_i}, c-PAA_{erw_i}, c-PAE_{erw_i}) présente au moins une copie de l'image de processus (PA_{Anlage}, PAA_{Anlage}, PAE_{Anlage}),
- dans laquelle la mémoire (7) est prévue pour la mise en mémoire de l'image de processus élargie (c-PA_{erw_i}, c-PAA_{erw_i}, c-PAE_{erw_i}) et de l'image de processus (PA_{Anlage}, PAA_{Anlage}, PAE_{Anlage}),
- dans laquelle l'image de traitement élargie (c-PA_{erw_i}, c-PAA_{erw_i}, c-PAE_{erw_i}) est prévue pour le programme de simulation (13), dans laquelle l'image de processus élargie (c-PA_{erw_i}, c-PAA_{erw_i}, c-PAE_{erw_i}) se présente sous un format de données qui est traité par le programme de simulation (13), dans laquelle le programme de simulation (13) est prévu pour le calcul d'une détection virtuelle (VS) à partir de l'image de processus élargie (c-PA_{erw_i}, c-PAA_{erw_i}, c-PAE_{erw_i}),
- dans laquelle le système d'exploitation (OS) de la commande programmable par une mémoire (SPS) est prévu pour la gestion de la mémoire (7),
- dans laquelle au moyen de la détection virtuelle (VS) l'image de processus (PA_{Anlage}, PAA_{Anlage}, PAE_{Anlage}) est élargie en une image de processus (PA_{Anlage}, PAA_{Anlage}, PAE_{Anlage}) élargie à la détection virtuelle (VS), comme si des valeurs de capteurs calculées par le biais du programme de simulation (13) étaient déterminées par le biais de capteurs de l'installation (A), et dans laquelle l'image de processus (PA_{Anlage}, PAA_{Anlage}, PAE_{Anlage}) élargie à la détection virtuelle (VS) est prévue pour la commande de l'installation (A) par le biais de la mémoire programmable par une mémoire (SPS).

2. Commande programmable par une mémoire (SPS) selon la revendication 1, dans laquelle l'image de processus élargie (c-PA_{erw_i}, c-PAA_{erw_i}, c-PAE_{erw_i}) se compose de plusieurs copies de l'image de processus (PA_{Anlage}, PAA_{Anlage}, PAE_{Anlage}) .

3. Commande programmable par une mémoire (SPS) selon l'une quelconque des revendications précédentes, dans laquelle pour le support d'une mise à disposition de l'image de processus élargie (c-PA_{erw_i}, c-PAA_{erw_i}, c-PAE_{erw_i}) ainsi que de la détection virtuelle (VS) il est prévu un système d'ingénierie.

4. Commande programmable par une mémoire (SPS) selon l'une quelconque des revendications précédentes, dans laquelle l'image de processus élargie (c-PA_{erw_i}, c-PAA_{erw_i}, c-PAE_{erw_i}) n'est pas visible pour un utilisateur.

5. Commande programmable par une mémoire (SPS) selon l'une quelconque des revendications précédentes, dans laquelle il est prévu une modification de l'image de processus (PA_{Anlage}, PAA_{Anlage}, PAE_{Anlage}), de l'image de processus élargie (c-PA_{erw_i}, c-PAA_{erw_i}, c-PAE_{erw_i}) et/ou de la détection virtuelle (VS) à des moments pouvant être prédéfinis (t₁, t₂, t₃, t₄) et/ou à des moments (t₁, t₂, t₃, t₄) qui résultent d'une exploitation de l'installation (A) et/ou de l'unité informatique (1).

6. Commande programmable par une mémoire (SPS) selon l'une quelconque des revendications précédentes, dans laquelle il est prévu un système d'ingénierie destiné à la sélection de l'image de processus élargie (c-PA_{erw_i}, c-PAA_{erw_i}, c-PAE_{erw_i}) et/ou de la détection virtuelle (VS).

7. Commande programmable par une mémoire (SPS) selon l'une quelconque des revendications précédentes, dans laquelle il est prévu un plan de réalisation (AE) destiné à la modification d'opérations dans la commande programmable par une mémoire en prenant en compte la détection virtuelle (VS) et/ou l'image de processus (PA_{Anlage}, PAA_{Anlage}, PAE_{Anlage}) et dans laquelle l'image de processus élargie depuis l'extérieur de la commande programmable par une mémoire se comporte comme une image de processus (PA_{Anlage}, PAA_{Anlage}, PAE_{Anlage}).

8. Commande programmable par une mémoire (SPS) selon l'une quelconque des revendications précédentes, dans laquelle l'accès à la mémoire (7) s'effectue par le biais de la commande programmable par une mémoire (SPS) et/ou par le biais du programme de simulation (13) respectivement seulement pendant des plages de temps déterminées (15, 17) et dans laquelle le système d'exploitation (OS) de la commande programmable par une mémoire (SPS) est prévu pour la détermination et/ou la gestion des plages de temps (15, 17) .

9. Procédé destiné à la commande d'une commande programmable par une mémoire (SPS), dans lequel la commande programmable par une mémoire (SPS) reçoit de l'installation (A) à commander une image de processus (PA_{Anlage}, PAA_{Anlage}, PAE_{Anlage}), dans lequel l'image de processus (PA_{Anlage}, PAA_{Anlage}, PAE_{Anlage}) se compose d'une image de processus d'entrée ainsi que d'une image de processus de sortie, dans lequel l'image de processus d'entrée est transmise de l'installation (A) à la commande programmable par une mémoire (SPS) et contient des données de capteur déterminées et/ou des positions d'actionneurs lisibles au moyen de capteurs et/ou des grandeurs d'exploitation mesurées de machines électriques de l'installation (A), et dans lequel l'image de processus de sortie est transmise de la commande programmable par une mémoire (SPS) à l'installation (A) et contient des instructions destinées à la position d'actionneurs et/ou des instructions destinées à l'activation de capteurs, dans lequel l'image de processus (PA_{Anlage}, PAA_{Anlage}, PAE_{Anlage}) est copiée dans une image de processus élargie (c-PA_{erw_i}, c-PAA_{erw_i}, c-PAE_{erw_i}), dans lequel l'image de processus élargie (c-PA_{erw_i}, c-PAA_{erw_i}, c-PAE_{erw_i}) est mise en mémoire dans une mémoire (7), dans lequel un programme de simulation (13) sur une unité informatique (1) reçoit l'image de processus élargie (PAE), dans lequel l'image de processus élargie (c-PA_{erw_i}, c-PAA_{erw_i}, c-PAE_{erw_i}) est présente sous un format de données qui est traité par le programme de simulation (13), dans lequel le programme de simulation (13) calcule une détection virtuelle (VS) à partir de l'image de processus élargie (c-PA_{erw_i}, c-PAA_{erw_i}, c-PAE_{erw_i}) et la met en mémoire dans la mémoire (7) de la commande programmable par une mémoire (SPS), dans lequel le système d'exploitation (OS) de la commande programmable par une mémoire (SPS) gère l'accès à la mémoire (7), dans lequel au moyen de la détection virtuelle (VS) l'image de processus (PA_{Anlage}, PAA_{Anlage}, PAE_{Anlage}) est élargie à la détection virtuelle (VS) en une image de processus élargie (PA_{Anlage}, PAA_{Anlage}, PAE_{Anlage}), comme si des valeurs de capteur calculées par le biais du programme de simulation (13) étaient déterminées par le biais de capteurs de l'installation (A), et dans lequel l'installation (A) est commandée par le biais de l'image de processus élargie (PA_{Anlage}, PAA_{Anlage}, PAE_{Anlage}) à la détection virtuelle (VS) par le biais de la commande programmable par une mémoire (SPS).

10. Procédé selon la revendication 9, dans lequel la détection virtuelle (VS) sert à l'adaptation d'un programme destiné à la commande de l'installation (A) par le biais de la commande programmable par une mémoire (SPS) et/ou destiné à l'émulation et/ou destiné à la simulation d'une installation (A).

11. Installation (A), présentant une commande programmable par une mémoire (SPS) selon l'une quelconque des revendications 1 à 8.
